# EUROPÄISCHE PATENTSCHRIFT

(11) **EP 1 308 197 B1**
(45) Veröffentlichungstag und Bekanntmachung des Hinweises auf die Patenterteilung: **30.05.2007**
(21) Anmeldenummer: 02024314.3
(22) Anmeldetag: 02.11.2002
(51) Int. Cl.: B01D 47/04, B01D 47/16

(54) **Verfahren und Vorrichtung zum Entfernen von Verunreinigungen aus einem Luft-oder Abluftstrom**
Process and apparatus for removing pollutants from an air stream
Procédé et dispositif pour éliminer des polluants d'un courant d'air

(30) Priorität: 05.11.2001 DE 10154312
(43) Veröffentlichungstag der Anmeldung: 07.05.2003
(73) Patentinhaber: Wuest, Robert, 77694 Kehl-Neumühl (DE)
(72) Erfinder: Wuest, Robert, 77694 Kehl-Neumühl (DE)
(74) Vertreter: Wagner, Jutta

(56) Entgegenhaltungen:
- WO-A-92/14537
- DE-A- 3 021 606
- DE-C- 383 794
- US-A- 3 830 041
- PATENT ABSTRACTS OF JAPAN vol. 1997, no. 07, 31. Juli 1997 (1997-07-31) & JP 09 057040 A (BABCOCK HITACHI KK), 4. März 1997 (1997-03-04)

## Beschreibung

Die Erfindung betrifft ein Verfahren zum Entfernen von festen, flüssigen oder gasförmigen Verunreinigungen aus einem Luft- oder Abluftstrom, bei dem der Luftstrom mit einer Flüssigkeit in Kontakt gebracht wird, in der sich die Verunreinigungen ansammeln, und aus der sie entfernt werden.

Luft- und Abluftströme im industriellen Bereich, aber auch in Gebäuden sind häufig durch feste oder flüssige Partikel oder durch Gase verunreinigt, die zu Umweltbelastung und Geruchsbelästigung führen. Typische Beispiele sind:
- Stäube, die z.B. beim Mahlen, Sieben, Trocknen und Fördern anfallen;
- Rauch, der bei Verbrennungsprozessen oder beim Tabakgenuss entsteht;
- Aerosole und Oversprays, die bei chemischen Prozessen, z.B. bei der Herstellung von Düngemitteln, und in Lackieranlagen anfallen;
- Nebel, der z.B. bei der Säureherstellung oder beim Farbsprühen entsteht;
- Gase, z.B. Ammoniak, Amine und Schwefelwasserstoff, die bei chemischen Reaktionen oder im Wohnbereich entstehen, sowie flüchtige organische Verbindungen, wie z.B. Kohlenwasserstoffe.

Seit Beginn des industriellen Zeitalters wurden verschiedene Methoden zur Abluftreinigung entwickelt. Diese reichen von mechanischen Staub- und Aerosolabscheidern, Tuchfiltem und Flüssigkeitswäschern bis zu elektrostatischer Abscheidung. Zur Gaswäsche sind Absorptions- und Kondensationsprozesse üblich. Weiterhin sind, z.B. aus der WO-A-9214537, Verfahren und eine Vorrichtung zum Reinigen von mit Schadstoffen beladenen Gasen, wobei die Gase durch mindestens ein mit einem Schaumbildner versetztes wässriges Schäumbad geleitet werden.

Alle genannten Methoden sind aber mit Nachteilen verbunden: einige sind für die Feinreinigung unzureichend, andere sind sehr aufwendig und teuer, die meisten sind eng begrenzt auf die Reinigung sehr spezieller Abluftströme zugeschnitten.

Der Erfindung lag also die Aufgabe zugrunde, ein Verfahren zur Entfernung von Verunreinigungen aus Luft- und Abluftströmen zu entwickeln, das hochwirksam arbeitet, einfach und billig durchführbar ist und bei verschiedenartigen festen, flüssigen und gasförmigen Verunreinigungen angewandt werden kann. Eine weitere Aufgabe bestand darin, ein Verfahren bereitzustellen, welches die Erfüllung der immer schärfer werdenden gesetzlichen Auflagen und Grenzwerte für die Luftreinheit ermöglicht.

Diese Aufgaben werden durch das erfindungsgemäße Verfahren nach Anspruch 1 gelöst. Ein weitere Gegenstand der Erfindung ist eine Vorrichtungen zur Durchführung dieses Verfahrens nach Anspruch 13.

Das erfindungsgemäße Verfahren ist sowohl im industriellen Bereich beim Reinigen der Abluft aus Kaminen als auch bei der Luftwäsche in Gebäuden anwendbar. Bei Kaminen kann die erfindungsgemäße Vorrichtung entweder am oberen Kaminende angebracht sein, vorzugsweise ist sie als Bypass ausgelegt, wobei der Abluftstrom seitlich abgezogen, durch die Reinigungsvorrichtung geführt und weiter oben wieder in den Kamin eingeleitet wird. Bei der Beseitigung von Gerüchen und schlechter Luft in Gebäuden, z.B. Krankenhäusern, Gaststätten, Großküchen und Fabrikhallen wird durch ein Gebläse die Luft angesaugt, durch die Reinigungsvorrichtung geführt, dort gereinigt und wieder in den Raum zurückgeleitet. Das Verfahren kann auch als zusätzliche Maßnahme bei konventionellen Geräten zur Luftwäsche angewandt werden, um deren Effizienz zu verbessern. So kann die erfindungsgemäße Vorrichtung z. B. üblichen Venturi-Wäschern nachgeschaltet werden.

Das Verfahren kann zur Entfernung der verschiedenartigsten Verunreinigungen angewandt werden:
- feste Verunreinigungen, z.B. Stäube, mit einer Partikelgröße von 1 bis 30µm;
- feste Verunreinigungen, wie z.B. Aerosole, Oversprays oder Rauchpartikel mit einer Partikelgröße von kleiner als 1 µm, vorzugsweise kleiner als 0,1 µm;
- flüssige Verunreinigungen, wie Nebel mit einer Größe von weniger als 10 µm;
- gasförmige Verunreinigungen.

Bei dem erfindungsgemäßen Verfahren wird der Luftstrom durch ein oder mehrere trommelförmig zusammen gebogene Drahtnetze geführt, die horizontal liegend angeordnet sind, sich um die Achse der Trommel drehen, mit der Seifenlösung beladen sind und in ein mit Seifenlösung gefülltes Bad eintauchen. Der Trommeldurchmesser der Drahtnetze kann zwischen 10 und 200 cm liegen, ihre Länge beträgt vorzugsweise 20 bis 500 cm. Die Drahtnetze können aus Metalldrähten oder Glasfaserbündeln, die gegebenenfalls mit Kunststoff beschichtet sind, oder aus Kunststoffdrähten bestehen; die Maschenweite beträgt vorzugsweise 5 bis 50 mm. Die Maschen können z.B. dreieckige, viereckige, sechseckige oder achteckige Form haben oder auch dreidimensional mit Vor- und Rücksprüngen konstruiert sein. Bevorzugt sind mehrere, z. B. zwei bis fünf trommelförmige Drahtnetze konzentrisch ineinander angeordnet; es ist auch möglich, mehrere Drahtnetze hintereinander anzuordnen. Die Drahtnetze tauchen in ein Bad mit z.B. 0,1 bis 5%iger Seifenlösung ein, wobei die Eintauchtiefe vorzugsweise 1/10 bis 4/10 des Trommeldurchmessers beträgt. Die Trommel dreht sich um ihre Achse, so dass die Drahtnetze stets mit Seifenlösung beladen werden.

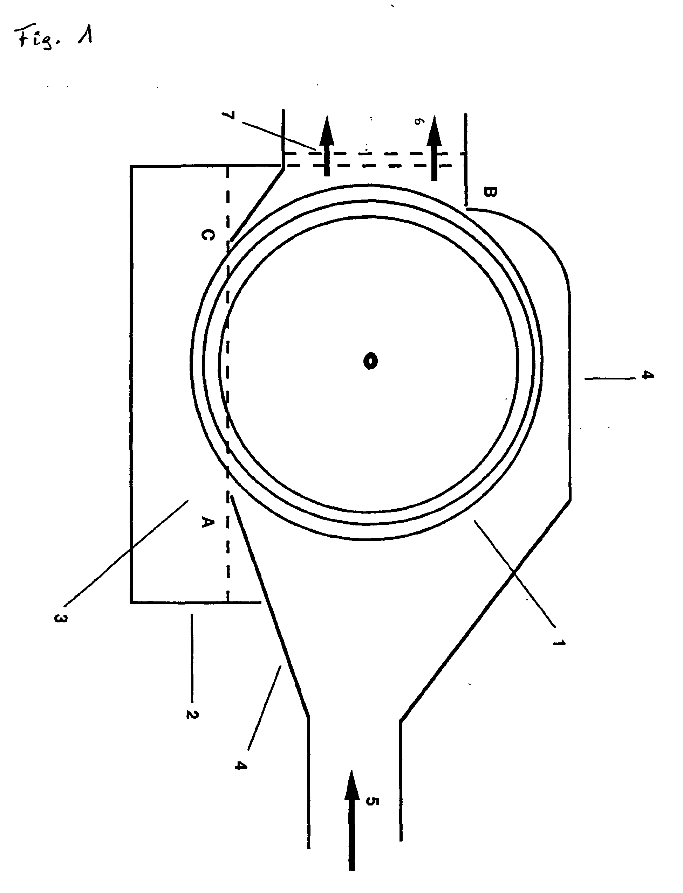

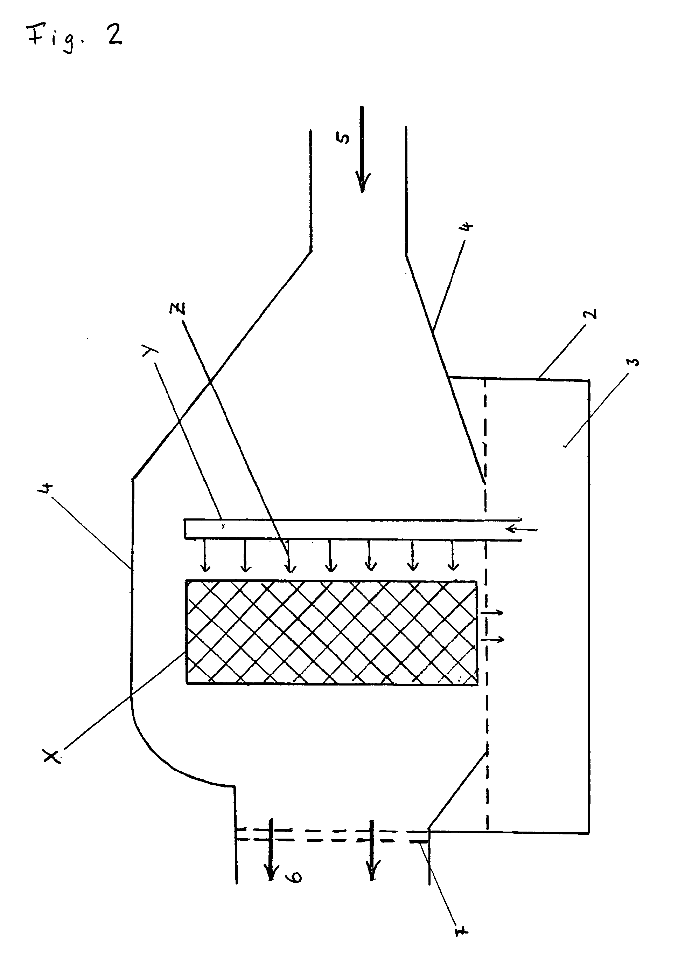

Für das Einführen des Luftstroms in die Drahtnetze sind mehrere Varianten möglich. Bei einer ersten, bevorzugten Methode trifft der Luftstrom seitlich auf die Trommel auf, wie es in der Zeichnung skizziert ist. Der Luftstrom 5 tritt dabei aus einem relativ engen Rohr aus, welches sich zu dem Führungsgehäuse 4 ausweitet, wodurch der Luftstrom verlangsamt wird. Dieser durchströmt dann zweimal die Drahtnetze 1, einmal im Bereich AB, und dann noch einmal im Bereich BC. Dabei belädt er sich mit der Seifenlösung 3 und bildet Seifenblasen. Diese platzen an einem dahinter angeordneten Gitter 7. Dieses Gitter kann auf verschiedenartige Weise ausgeformt sein, z.B. als engmaschiges Drahtnetz oder als Lochblech. Wesentlich ist, dass das Gitter für Luft, aber nicht für die flüssige Seifenlösung durchlässig ist. Der gereinigte Luftstrom 6 verlässt die Vorrichtung; die mit den Verunreinigungen beladenen Seifenlösung läuft in den Vorratsbehälter 2, aus dem sie abgezogen werden kann.

Der Kern der Erfindung ist darin zu sehen, dass der zu reinigende Luftstrom durch die Drahtnetze geführt wird, so dass sich an den Maschen Seifenblasen bilden, an deren Wände sich die Verunreinigungen ansammeln und in das Bad befördert werden. Der Inhalt des Bades wird kontinuierlich oder absatzweise abgeführt und frische Seifenlösung wird in das Bad zugeführt. Dabei wird auch die durch Verdunstung verloren gegangene Flüssigkeit wieder ersetzt. Aus der abgezogenen Seifenlösung werden die Verunreinigungen, z.B. durch Sedimentieren oder Filtrieren entfernt. Gasförmige Verunreinigungen werden zweckmäßigerweise im Bad an Feststoffen, z.B. Polymeren adsorbiert. Nach dem Entfernen aus dem Bad können sie durch Säurebehandlung desorbiert und die Polymeren wieder in das Bad zurückgeführt werden.

### Beispiel

Bei einer nach der skizzierten Ausführungsform konstruierten Pilotanlage wurden aus dem Kamin einer Ammoniumnitratfabrik 5000 m³ Abluft pro Stunde abgezogen. Mehr als 70% der Verunreinigungen, die im wesentlichen aus kristallförmigen Aerosolen mit einer Partikelgröße von etwa 0,1µm bestanden, wurden aus der Abluft entfernt.

## Patentansprüche

1. Verfahren zum Entfernen von Verunreinigungen aus einem Luft- oder Abluftstrom, bei dem der Luftstrom mit Seifenblasen in Kontakt gebracht wird, an denen sich die Verunreinigungen ansammeln und aus denen sie entfernt werden, **dadurch gekennzeichnet,**
- **dass** der Luftstrom durch ein oder mehrere trommelförmig zusammen gebogene, horizontal liegende, sich um die Trommelachse drehende Drahtnetze geführt wird, die in ein darunter angeordneten Bad mit einer Seifenlösung eintauchen und dort mit dieser beladen werden,
- **dass** sich an den Maschen des Drahtnetzes durch den Luftstrom Seifenblasen bilden, an deren Wände sich die Verunreinigungen ansammeln, und die an einem hinter dem Drahtnetz angeordneten Gitter platzen,
- **dass** die dabei gebildete Seifenlösung mit den Verunreinigungen wieder in das Bad abfließt,
- und **dass** der Inhalt des Bades kontinuierlich oder absatzweise abgeführt wird, und die Verunreinigungen daraus entfernt werden, und in gleichem Maße frische Seifenlösung in das Bad zugeführt wird.

2. Verfahren nach Anspruch 1, **dadurch gekennzeichnet, dass** mehrere trommelförmige Drahtnetze konzentrisch ineinander angeordnet sind.

3. Verfahren nach Anspruch 1, **dadurch gekennzeichnet, dass** mehrere Drahtnetze bzw. Gruppen von Drahtnetzen hintereinander angeordnet sind.

4. Verfahren nach Anspruch 1, **dadurch gekennzeichnet, dass** die Maschenweite der Drahtnetze 5 bis 50 mm beträgt.

5. Verfahren nach Anspruch 1, **dadurch gekennzeichnet, dass** die Drahtnetze aus Metalldrähten oder Glasfaserbündeln, die gegebenenfalls mit Kunststoff beschichtet sind, oder aus Kunststoffdrähten bestehen.

6. Verfahren nach Anspruch 6, **dadurch gekennzeichnet, dass** die Eintauchtiefe der Drahtnetze 1/10 bis 4/10 des Trommeldurchmessers beträgt.

7. Verfahren zur Entfernung von Verunreinigungen aus der Abluft von Kaminen, **dadurch gekennzeichnet, dass** die Abluft aus dem Kamin seitlich abgezogen, nach Anspruch 1 gereinigt und die gereinigte Luft wieder in den Kamin zurückgeführt wird, oder dass die Abluft am oberen Ende des Kamins nach Anspruch 1 gereinigt wird.

8. Verfahren zur Entfernung von Verunreinigungen aus der Luft von Gebäuden, **dadurch gekennzeichnet, dass** die Luft aus dem Raum abgesaugt, nach Anspruch 1 gereinigt und die gereinigte Luft wieder in den Raum zurückgeführt wird.

9. Verfahren nach Anspruch 1, **dadurch gekennzeichnet, dass** gasförmige Verunreinigungen entfernt werden.

10. Verfahren nach Anspruch 1, **dadurch gekennzeichnet, dass** flüssige Verunreinigungen mit einer Partikelgröße von kleiner als 10 µm. z.B. Nebel, entfernt werden.

11. Verfahren nach Anspruch 1, **dadurch gekennzeichnet, dass** feste Verunreinigungen mit einer Partikelgröße von kleiner als 1 µm, z.B. Aerosole, Oversprays oder Rauchpartikel entfernt werden.

12. Verfahren nach Anspruch 1, **dadurch gekennzeichnet, dass** feste Verunreinigungen mit einer Partikelgröße von 1 bis 30 µm. z.B. Stäube, entfernt werden.

13. Vorrichtung zur Durchführung des Verfahrens nach Anspruch 1, **gekennzeichnet durch** folgende Bestandteile:
- ein trommelförmig zusammengebogenes, horizontal liegendes, um seine Achse drehbares Drahtnetz 1 bzw. mehrere, konzentrisch ineinander angeordnete Drahtnetze,
- ein Vorratsbehälter **2** mit Seifenlösung **3**, in den das Drahtnetz eintaucht,
- ein Führungsgehäuse **4** für den Luftstrom, das um das Drahtnetz herum angebracht ist,
- mit einem Eintrittsbereich **5** und einem Austrittsbereich **6** für den Luftstrom,
- sowie ein Gitter **7** am Austrittsbereich, das für Luft, aber nicht für die Seifenlösung durchlässig ist.

## Claims

1. A method for removing pollutants from an air or waste air stream, the air stream being exposed to soap bubbles on which the pollutants collect and from which they are removed, **characterized in that**
- the air stream is guided through one or more drum-shaped horizontal wire nets rotating about the drum axis, the wire nets being immersed in a soap solution bath disposed underneath and the solution being applied to them,
- soap bubbles form on the mesh of the wire net as a result of the air stream, the pollutants collecting on the walls of said bubbles and the bubbles bursting on a screen disposed behind the wire net,
- the formed soap solution with the pollutants then drains into the bath,
- and the content of the bath is drained continuously or at intervals and the pollutants are removed therefrom, and that fresh soap solution is fed into the bath in equal amounts.

2. The method according to claim 1, **characterized in that** a plurality of drum-shaped wire nets are disposed concentrically inside each other.

3. The method according to claim 1, **characterized in that** a plurality of wire nets and/or groups of wire nets are disposed in succession.

4. The method according to claim 1, **characterized in that** the mesh size of the wire nets is 5 to 50 mm.

5. The method according to claim 1, **characterized in that** the wire nets are made of metal wires or glass fiber bundles, which may optionally be coated with plastic, or plastic wires.

6. The method according to claim 6, **characterized in that** the immersion depth of the wire nets is 1/10 to 4/10 of the drum diameter.

7. A method for removing pollutants from the waste air of chimneys, **characterized in that** the waste air is drawn laterally from the chimney, cleaned according to claim 1 and the cleaned air is returned to the chimney or the waste air is cleaned at the top end of the chimney according to claim 1.

8. A method for removing pollutants from the air of buildings, **characterized in that** the air is extracted from the space, cleaned according to claim 1 and the cleaned air is returned to the space.

9. The method according to claim 1, **characterized in that** gaseous pollutants are removed.

10. The method according to claim 1, **characterized in that** liquid pollutants having a particle size of less than 10 µm, such as fog, are removed.

11. The method according to claim 1, **characterized in that** solid pollutants having a particle size of less than 1 µm, such as aerosols, overspray or smoke particles, are removed.

12. The method according to claim 1, **characterized in that** solid pollutants having a particle size of 1 to 30 µm, such as dust, are removed.

13. An apparatus for carrying out the method according to claim 1, **characterized by** the following components:
- a drum-shaped horizontal wire net 1 rotating about the axis thereof and/or a plurality of wire nets disposed concentrically inside each other,
- a reservoir 2 with soap solution 3 in which the wire net is immersed,
- a guide housing 4 for the air stream, which guide housing is provided around the wire net,
- an inlet region 5 and an outlet region 6 for the air stream,
- as well as a screen 7 at the outlet region, which is permeable to air, but not to the soap solution.

## Revendications

1. Procédé pour enlever des impuretés d'un flux d'air ou d'un flux d'air évacué, dans lequel le flux d'air est mis en contact avec des bulles de savon, sur lesquelles les impuretés s'accumulent et à partir desquelles elles sont enlevées, **caractérisé**
- **en ce que** le flux d'air est guidé par un ou plusieurs treillis en fils pliés ensemble en forme de tambour, disposés horizontalement et tournant autour de l'axe du tambour, qui plongent dans un bain disposé au-dessous avec une solution de savon et sont chargés avec cette solution,
- **en ce que** des bulles de savon sur les parois desquelles les impuretés s'accumulent se forment sur les mailles du treillis en fils sous l'effet du flux d'air et éclatent sur une grille disposée derrière le treillis en fils,
- **en ce que** la solution de savon formée ainsi s'écoule avec les impuretés à nouveau dans le bain,
- et **en ce que** le contenu du bain est évacué de façon continue ou par intervalles, et les impuretés en sont enlevées, et une solution de savon fraîche est amenée dans le bain dans la même mesure.

2. Procédé selon la revendication 1, **caractérisé en ce que** plusieurs treillis en fils en forme de tambour sont disposés de façon concentrique les uns dans les autres.

3. Procédé selon la revendication 1, **caractérisé en ce que** plusieurs treillis en fils ou groupes de treillis en fils sont disposés les uns derrière les autres.

4. Procédé selon la revendication 1, **caractérisé en ce que** la largeur de maille des treillis en fils est de 5 à 50 mm.

5. Procédé selon la revendication 1, **caractérisé en ce que** les treillis en fils sont à base de fils métalliques ou de faisceaux de fibre de verre, qui sont recouverts, le cas échéant, de plastique, ou sont à base de fils plastique.

6. Procédé selon la revendication 6, **caractérisé en ce que** la profondeur d'immersion des treillis en fils représente 1/10 à 4/10 du diamètre de tambour.

7. Procédé pour l'enlèvement d'impuretés de l'air évacué de cheminées, **caractérisé en ce que** l'air évacué est enlevé de la cheminée sur le côté, est nettoyé selon la revendication 1 et l'air nettoyé est recyclé à nouveau dans la cheminée, ou **en ce que** l'air évacué est nettoyé sur l'extrémité supérieure de la cheminée selon la revendication 1.

8. Procédé pour l'enlèvement d'impuretés de l'air de bâtiments, **caractérisé en ce que** l'air est aspiré hors de l'espace, nettoyé selon la revendication 1 et l'air nettoyé est ramené à nouveau dans l'espace.

9. Procédé selon la revendication 1, **caractérisé en ce que** des impuretés gazeuses sont enlevées.

10. Procédé selon la revendication 1, **caractérisé en ce que** des impuretés liquides présentant une grandeur de particule inférieure à 10 µm, par exemple du brouillard, sont enlevées.

11. Procédé selon la revendication 1, **caractérisé en ce que** des impuretés solides présentant une grandeur de particule inférieure à 1µm, par exemple des aérosols, des excédents de spray (oversprays) ou des particules de fumée sont enlevés.

12. Procédé selon la revendication 1, **caractérisé en ce que** des impuretés solides présentant une grandeur de particule de 1 à 30 µm, par exemple des poussières, sont enlevées.

13. Dispositif pour la mise en oeuvre du procédé selon la revendication 1, **caractérisé par** les composants suivants :
- un treillis en fils 1 plié en forme de tambour, disposé horizontalement et pouvant tourner autour de son axe ou plusieurs treillis en fils disposés de façon concentrique les uns dans les autres,
- un réservoir 2 avec une solution de savon 3 dans laquelle le treillis en fils plonge,
- un boîtier de guidage 4 pour le flux d'air qui est placé autour du treillis en fils,
- avec une zone d'entrée 5 et une zone de sortie 6 pour le flux d'air,
- et une grille 7 sur la zone de sortie qui est perméable pour l'air, mais pas pour la solution de savon.
